Europäisches Patentamt

European Patent Office

Office européen des brevets

(11) Veröffentlichungsnummer: **0 436 896 A2**

(12) **EUROPÄISCHE PATENTANMELDUNG**

(21) Anmeldenummer: **90124865.8**

(22) Anmeldetag: **20.12.90**

(51) Int. Cl.5: **C08J 7/06, C08J 7/12,** //C08L81:02,C08L69:00

(30) Priorität: **06.01.90 DE 4000246**

(43) Veröffentlichungstag der Anmeldung: **17.07.91 Patentblatt 91/29**

(84) Benannte Vertragsstaaten: **BE DE FR GB IT**

(71) Anmelder: **BAYER AG**

**W-5090 Leverkusen 1 Bayerwerk(DE)**

(72) Erfinder: **Thurm, Siegfried, Dr.**
**Am Damm 5a**
**W-4005 Meerbusch 3(DE)**
Erfinder: **Stahlke, Kurt-Rainer, Dr.**
**Amselweg 20**
**W-5067 Kürten 2(DE)**
Erfinder: **Holm, Reimer, Dr.**
**c/o Mobay Corporation**
**Pittsburgh, PA 15205(US)**
Erfinder: **Sommer, Klaus, Dr.**
**Morgengraben 3**
**W-5000 Köln 80(DE)**

(54) **Kunststofformkörper mit verbesserter Witterungsbeständigkeit.**

(57) Gegenstand der Erfindung sind Kunststofformkörper aus thermoplastischen Polyarylensulfiden und/oder aus thermoplastischen Polycarbonaten, die mit Zinksulfid (ZnS) beschichtet sind.

EP 0 436 896 A2

## KUNSTSTOFFFORMKÖRPER MIT VERBESSERTER WITTERUNGSBESTÄNDIGKEIT

Gegenstand der Erfindung sind Kunststofformkörper aus thermoplastischen Polyarylensulfiden und/oder aus thermoplastischen Polycarbonaten, die mit Zinksulfid (ZnS) beschichtet sind.

Die erfindungsgemäßen Kunststofformkörper besitzen eine gute Beständigkeit gegen die Einflüsse der Außenatmosphäre, insbesondere gegen (z.B. Sonnen- und Tages-) Licht. Sie erhalten über einen langen Zeitraum ihre Kunststoffeigenschaften, beispielsweise bezüglich Mechanik und Optik.

ZnS-haltige Schichten sind bekannt, z.B. Wärmeschutzschichten (JA-A 5 9071-854) EP-A 50 199, DE-A 3329 504), Interferenzschichten (DE-A 3302 827), Elektrolumineszenzschichten (EP-A 249 942, JA-A 7 238 308, FR-A 2420 270) Wärmeschutzschichten in optischen Speichern (JA-A 63020 742, JA-A 63 102 049, JA-A 633 02 447) photoleitende Schichten in elektrophotographischen Kopiergeräten (JA-A 62 011 857, JA-A 79 016 399), JA-A 54 143 646, US-A 4269 912).

Gegenstand der Erfindung sind geformte Körper aus Polyarylensulfiden und/oder Polycarbonaten, deren Oberflächen mit Zinksulfid beschichtet sind.

Für die Herstellung der erfindungsgemäßen Formkörper verwendbare Polyarylensulfide, vorzugsweise Polyphenylensulfid sind bekannt (z.B. US-A 3 354 129, EP-A 171 021).

Für die Herstellung der erfindungsgemäßen Formkörper verwendbare thermoplastische Polycarbonate sind bekannt und auch handelsüblich.

Das Beschichten der Kunststofformkörper mit ZnS (Zinksulfid) erfolgt in einer bekannten Vakuumaufdampfanlage, wobei der Kunststofformkörper an einem Substrathalter befestigt ist. Man arbeitet in einem Vakuum von etwa 1 x 10$^{-5}$ mbar. Das ZnS wird mittels Elektronenstrahlkanone verdampft. Zwischen der Elektronenstrahlkanone und dem befestigten Formkörper ist eine bewegliche Blende angebracht, die während der Aufheizphase des ZnS ein vorzeitiges Bedampfen des Kunststofformkörpers verhindert.

Die Verdampfung des ZnS erfolgt bei Temperaturen zwischen etwa 1500 K und 3000 K.

Vor dem Aufdampfen des Schutzfilmes kann das Substrat einer Niederdruckplasmabehandlung in einer Gasatmosphäre, beispielsweise Argon oder O$_2$, bei einem Druck von ca. 5 x 10$^{-2}$ zu unterzogen werden, um gegebenenfalls vorhandene Verunreinigungen von dem Substrat zu entfernen und dadurch die Haftung der Schutzschicht auf dem Substrat zu verbessern.

Das ZnS wird zunächst mit der Elektronenstrahlkanone mit einer Leistung von 1-2 kW aufgeheizt, um es auf eine Temperatur von ca, 1500 K bis 3000 K zu bringen. Danach wird die schwenkbare Blende zwischen Kunststofformkörper und Elektronenstrahlkanone entfernt und die Beschichtung des Kunststoffkörpers eingeleitet.

Der Dicke der Schutzschicht kann während des Aufdampfvorganges, beispielsweise mittels einer Schwingquarzschichtdickenmeßgerätes, kontrolliert werden. Außerdem kann die stöchiometrische Zusammensetzung der Schutzschicht durch Zugabe von Reaktivgasen z.B. H$_2$S beeinflußt werden. Daher ist im folgenden immer, wenn von einer ZnS-Schicht gesprochen wird, eine Schicht zu verstehen, in der das Verhältnis der Anzahl der Zn-Atome zu der Anzahl der Schwefel-Atome 1 bis 2 beträgt.

Die Schichtdicken des ZnS beträgt 40 bis 4000 nm, vorzugsweise 50 bis 2000 nm.

Nachdem auf dem Kunststofformkörper eine ZnS-Schicht genügender Dicke, beispielsweise eine Schicht von 500 nm, abgeschieden ist, wird die Schwenkblende wieder zwischen Substrathalter und Elektronenstrahlkanone eingebracht, und die Elektronenstrahlkanone abgeschaltet. Zur Erzielung einer besseren Gleichmäßigkeit der Schichtdicke der ZnS-Schicht empfiehlt es sich, den Substrathater beweglich, z.B. drehbar, auszubilden.

Die ZnS-haltige Schicht kann auch mit einer anderen Verfahrensweise auf die Kunststofformkörper dadurch aufgebracht werden, indem man das Zn allein oder ein Gemisch aus Zn und ZnS in einer schwefelhaltigen Atmosphäre verdampft. Dabei kann für die Verdampfung eine Elektronenstrahlkanone oder ein widerstandsbeheizter oder induktiv beheizter Verdampfer benutzt werden.

Eine weitere Verfahrensweise zur Aufbringung der ZnS-haltigen Schicht ist das sogenannte Gleichspannungs- oder Hochfrequenz-Sputtern des ZnS oder das reaktive Gleichspannungs- oder Hochfrequenz-Sputtern des Zn.

Eine weitere Verfahrensweise zur Aufbringung der ZnS-haltigen Schicht auf den Kunststofformkörper ist das sogenannte "plasmagestützte" Beschichtungsverfahren, wobei sich der Kunststofformkörper in einem Hochfrequenz-oder Mikrowellenplasma befindet, und das ZnS aus einer abbaubaren Metallverbindung und einem S-haltigen Gas z.B. H$_2$S, erzeugt wird.

Eine derartige abbaubare Metallverbindung ist beispielsweise eine organische Zinkverbindung wie Zn(C$_2$H$_5$)$_2$.

Eine weitere Verfahrensweise zum Aufbringen der ZnS-haltigen Schicht besteht im Lackieren des Kunststofformkörpers mit einem ZnS-haltigen Lack.

Erfindungsgemäß können die Kunststofformkörper, beliebige Gestalt haben. Vorzugsweise sind die erfindungsgemäßen Formkörper für Elektronikbauteile, Bauteile für die Kfz-Industrie, für Haushaltsgeräte und für Beleuchtungseinrichtungen geeignet.

Beispiel

Auf eine Platte aus Polyarylensulfid (z.B. Polyphenylensulfid wie TEDUR®) (Durchmesser 80 mm, Dicke 3 mm) mit Zugaben von 30 Gew.-% Talkum und 30 Gew.-% Glasfasern wird eine ZnS-Schicht von 500 nm wie folgt aufgebracht: Der Formkörper wird in einer Aufdampfanlage der Fa. Leybold-Heraeus GmbH vom Typ A1100 an einem rotierbaren Substrathalter befestigt. Anschließend wird die Kammer der Aufdampfanlage geschlossen und auf ca. $1 \times 10^{-5}$ mbar evakuiert. Danach wird Ar bis zu einem Druck von $5 \times 10^{-2}$ mbar eingelassen und der Drehantrieb des Substrathalters eingeschaltet, so daß dieser mit 20 U/min rotiert. Anschließend wird durch Anlegen einer Spannung an eine als Kathode geschaltete Al-Platte eine Spannung von 600 V angelegt und ein Niederdruckplasma gezündet. In diesem Plasma wird der Formkörper 2 Minuten mit einer Leistung von 15 W behandelt. Danach wird die Spannung abgeschaltet, die Ar-Zugabe beendet und der Kessel erneut auf $1 \times 10^{-5}$ mbar evakuiert.

Nach Erreichen dieses Drucks wird die Elektronenstrahlkanone eingeschaltet und das zu verdampfende ZnS mit einer Leistung von 1,6 kW innerhalb von 2 Minuten auf ca. 2500 K erhitzt. Anschließend wird die bewegliche Blende zwischen Elektronenstrahlkanone und Substrathalter entfernt und der Formkörper für 200 Sekunden bei einer Aufdampfrate von 2,5 nm/sec beschichtet. Danach wird die bewegliche Blende wieder zwischen Elektronenstrahlkanone und Substrathalter eingebracht und der Beschichtungsvorgangbeendet. Nach dem Abschalten der Elektronenstrahlkanone und Abkühlung des Verdampfgutes wird nach 15 Minuten die Kammer der Aufdampfanlage belüftet und der beschichtete Formkörper entnommen.

Der so beschichtete Polyarylensulfidformkörper wird zusammen mit einem unbeschichteten Formkörper durch eine Xenon-UV-Lampe (1600 W XBO) hinter einem 305 nm-Kantenfilter im Abstand von 31 cm bestrahlt.

In zeitlichen Abständen von 20 h werden die Proben entnommen und die Remissionsspektren mit einer Kugelgeometrie im Wellenlängenbereich von 400 nm bis 700 nm vermessen und danach der Yellowness-Index (Y.I.) nach ASTM D 1925 bestimmt.

Durch Differenz mit dem Ausgangswert wird die zeitliche Veränderung $\Delta$ Y.I. berechnet. Die beiliegende Kurve zeigt den Verlauf von $\Delta$ Y.I. für die beschichtete (79/1) und die unbeschichtete (79/2) Probe. Man erkennt deutlich, daß die beschichtete Probe wesentlich langsamer vergilbt.

**Patentansprüche**

1. Kunststofformkörper aus Polyarylensulfiden oder aus Polycarbonaten, dadurch gekennzeichnet, daß die Kunststofformkörper mit ZnS-haltigen Schichten beaufschlagt sind.